# EUROPÄISCHE PATENTSCHRIFT

(11) **EP 0 526 782 B1**
(45) Veröffentlichungstag und Bekanntmachung des Hinweises auf die Patenterteilung: **26.10.1994**
(21) Anmeldenummer: 92112221.4
(22) Anmeldetag: 17.07.1992
(51) Int. Cl.: F16B 2/00, F16B 5/06, F16B 5/00

(54) **Plastik-Clip zur Blindbefestigung von weichelastischen Flachkörpern auf Trägerplatten**
Plastic clip for blind installation of flexible flat members on supporting plates
Clip en matière plastique pour l'installation aveugle des membres plats souples sur des supports

(30) Priorität: 07.08.1991 DE 9109791 U
(43) Veröffentlichungstag der Anmeldung: 10.02.1993
(73) Patentinhaber: A. Raymond & Cie, F-38028 Grenoble-Cédex (FR)
(72) Erfinder: Boville, Daniel, F-75020 Paris (FR)
(74) Vertreter: Kirchgaesser, Johannes, Dipl.-Ing.

(56) Entgegenhaltungen:
- DE-A- 4 023 210
- GB-A- 1 578 056
- US-A- 4 377 358

## Beschreibung

Die Erfindung geht aus von einem Plastik-Clip der im Oberbegriff des Anspruchs 1 angegebenen Art, welcher durch GB-A-1578056 bekannt ist.

Ein weiterer Clip ist durch US-A-4377358 bekannt, bei dem die Schafthälften mit je einem flanschartigen Vorsprung versehen und mit den Spreizfingern zunächst geradlinig verbunden sind. Nach dem Einführen in das Befestigungsloch beider Platten werden die Spreizfinger unmittelbar hinter dem Lochrand abgeknickt und soweit nach außen gedrückt, bis die Spreizfinger flach an der Rückseite der Trägerplatte anliegen.

Um die Spreizfinger von der Montageseite her auseinanderdrücken zu können, sind die freien Enden der Spreizfinger mit zwei Stangen verbunden, die zwischen den Spreizfingern dicht nebeneinander angeordnet und dicht unterhalb der Flansche zu einer gemeinsamen Stange zusammengeführt sind. Diese Stange ragt im Anlieferungszustand des Clips über die Flansche hinaus. Nach dem Einführen der Spreizfinger in die übereinanderliegenden Löcher der zwei zu verbindenden Platten wird die Stange in den Clip eingedrückt. Hierbei weichen die mit den Stangen verbundenen Enden der Spreizfinger seitlich aus und werden fest von hinten gegen die Platte gedrückt, so daß beide Platten zwischen dem Flansch und den Spreizfingern fest eingespannt sind.

Dieser Plastik-Clip wird aufgrund der zum Aufspreizen benötigten Gestänge als sehr aufwendig empfunden. Auch besteht leicht die Gefahr, daß die Stange zu tief eingedrückt wird und dann die Spreizfinger wieder von der Plattenunterseite weggezogen werden. Hierdurch kann die Andrückkraft gegen die Platte nachlassen oder ganz aufgehoben werden, so daß die angestrebte klemmende Wirkung nicht eintritt.

Ausgehend von diesem Stand der Technik ist es Aufgabe der Erfindung, einen Plastik-Clip zur Blindbefestigung zu schaffen, welcher einfacher und damit kostengünstiger aufgebaut ist und eine einfache Handhabung sowie eine sichere Klemmwirkung gewährleistet.

Diese Aufgabe wird gemäß der im Anspruch 1 angegebenen Erfindung dadurch gelöst, daß die Schafthälften etwa rechtwinklig mit den Spreizfingern verbunden sind und von diesen im Anlieferungszustand nach außen abstehen.

Zur Befestigung eines weichelastischen Flachkörpers, wie beispielsweise einer Dichtungsmatte auf der Trägerplatte, wird der erfindungsgemäß ausgebildete Plastik-Clip mit zusammenliegenden Spreizfingern in das Befestigungsloch der Dichtungsmatte eingeführt, bis die rechtwinklig abstehenden Schafthälften am Lochrand aufliegen. Sodann werden die Spreizfinger in das Loch eingedrückt und gleichzeitig die seitlich abstehenden Schafthälften zusammengeführt, bis die Spreizfinger den Lochrand hintergreifen und sich von der Rückseite auf der weichelastischen Matte abstützen. Sodann werden die zusammengeführten Schafthälften in das Loch der Trägerplatte eingedrückt, bis die Vorsprünge an den Schafthälften das Loch überwunden haben und sich von der Rückseite am Lochrand abstützen.

Nach einer bevorzugten Ausführungsform der Erfindung sind an den freien Schaftenden noch gegeneinander gerichtete, ineinandersteckbare Rasthaken vorgesehen, die sich nach dem Zusammenführen der Schaftenden ineinander verhaken und so für eine zusätzliche Fixierung der Spreizfinger in der Klemmposition sorgen. Um die Klemmwirkung weiter zu verbessern, können außerdem noch an den Schaftabschnitten im Abstand von den Vorsprüngen etwa rechtwinklig dünne Trennlappen abstehen, welche nach dem Einführen der Schafthälften in das Loch der Trägerplatte zwischen den beiden zu verbindenden Platten eingeklemmt werden.

In der Zeichnung ist ein bevorzugtes Ausführungsbeispiel der Erfindung dargestellt und soll nachfolgend näher beschrieben werden. Es zeigt
- Fig. 1: eine Seitenansicht des Plastik-Clips im Anlieferungszustand,
- Fig. 2: eine Draufsicht auf den Plastik-Clip gemäß Figur 1,
- Fig. 3: den Plastik-Clip im montierten Zustand,
- Fig. 4: einen Schnitt durch die Schafthälften in Höhe der Rasthaken.
- Fig. 5: den Clip beim Einführen in das Befestigungsloch der Gummimatte,
- Fig. 6: den in das Loch eingeführten Clip beim Zusammenführen der beiden Schafthälften und
- Fig. 7: den mit der Gummimatte fest verbundenen Clip beim Einführen des Schaftes in das Befestigungsloch der Trägerplatte.

Der in den Figuren dargestellte Plastik-Clip dient zur Blindbefestigung von weichelastischen Flachkörpern, wie beispielsweise Dichtungsmatten 5 auf Trägerplatten 6. Der Clip besteht im wesentlichen aus zwei im Querschnitt halbkreisförmigen Spreizfingern 1 und 1' und zwei mit diesen einstückig verbundenen Schafthälften 2 und 2', welche im Anlieferungszustand des Clips etwa rechtwinklig von den Fingern 1, 1' nach außen abstehen. Die beiden Schafthälften 2, 2' sind an den sich gegenüberliegenden Knickkanten 3 und 3' über einen flexiblen Steg 4 schwenkbar miteinander verbunden.

An den beiden Schafthälften 2, 2' befinden sich in einem der Gesamtdicke der zu verbindenden Platten 5 und 6 entsprechenden Abstand von den Spreizfingern 1, 1' jeweils seitlich abstehende Vorsprünge 7 und 7' mit schrägen Anlageflächen 13, 13', welche sich nach dem Einführen in das Loch 11 der Trägerplatte 6 an dem rückseitigen Lochrand 12 abstützen.

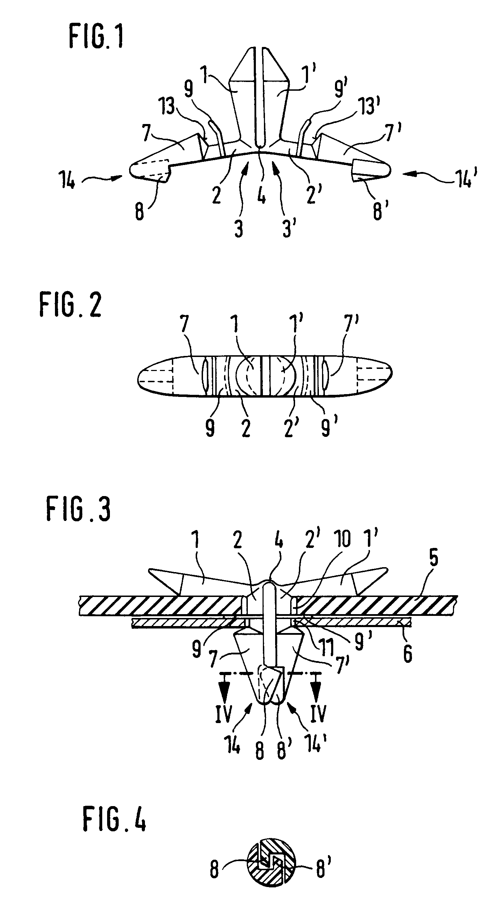

An den freien Enden 14, 14' der Schafthälften 2, 2' sind, wie insbesondere aus Figur 4 ersichtlich, gegeneinandergerichtete, ineinandersteckbare Rasthaken 8 und 8' vorgesehen. An den Schafthälften 2, 2' sind ferner dünne Trennlappen 9 und 9' angeformt, welche zwischen den Knickkanten 3, 3' und den Vorsprüngen 7, 7' etwa im Abstand der Plattenstärke der Trägerplatte 6 von den Anlageflächen 13, 13' der Vorsprünge 7 und 7' etwa rechtwinklig zu den Schafthälften 2, 2' abstehen und an ihren Enden zu den Vorsprüngen 7 und 7' hin leicht umgebogen sind.

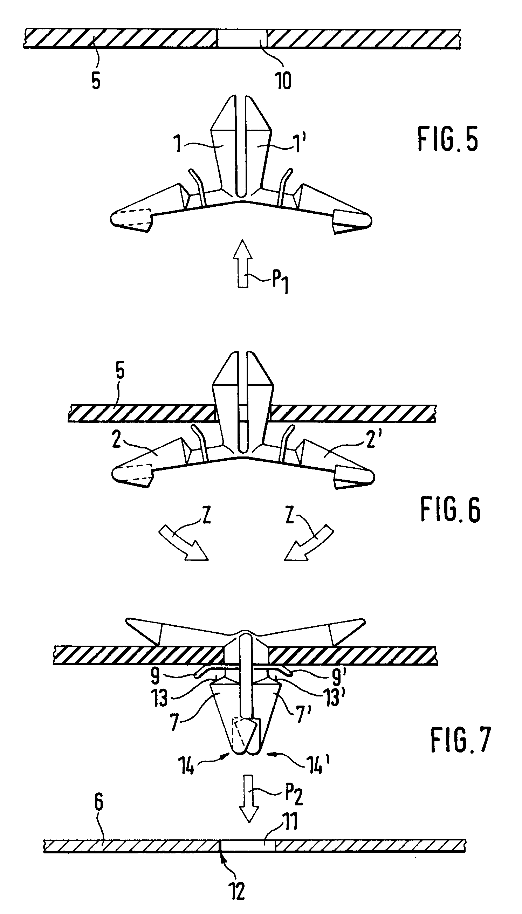

Zur Befestigung der Dichtungsmatte 5 auf der Trägerplatte 6 werden die zusammengelegten Spreizfinger 1, 1' zunächst in das Befestigungsloch 10 der Dichtungsmatte 5 in Richtung des Pfeiles"P1"eingeführt, bis die im Anlieferungszustand rechtwinklig abstehenden Schafthälften 2 und 2' bzw. die Trennlappen 9, 9' auf der Dichtungsmatte 5 aufliegen (Fig. 5). Dann werden die Finger 1, 1' kräftig in das Loch 10 eingedrückt und gleichzeitig die seitlich abstehenden Schafthälften 2, 2' in Richtung der Pfeile "Z" zusammengeführt (Fig. 6).

Infolge dieser kombinierten Druckkippbewegung und der starren Winkelverbindung werden die Spreizfinger 1, 1' gleichzeitig nach außen gedrückt und hintergreifen den Rand des sich elastisch erweiternden Loches 10 in der Dichtungsmatte 5 (Fig. 7).

Am Ende der Kippbewegung stoßen die Schafthälften 2, 2' mit ihren Enden 14, 14' gegeneinander, so daß die Rasthaken 8, 8' ineinander verhaken und der Clip in seiner Klemmlage abgesichert ist (Fig. 4).

Nun werden die verhakten Schaftenden 14, 14' in das Loch 11 der Trägerplatte 6 in Richtung des Pfeiles "P2" eingedrückt, bis die Vorsprünge 7, 7' das Loch 11 überwunden haben und die Anlageflächen 13, 13' sich von der Rückseite am Lochrand 12 abstützen.

Hierbei legen sich die vom Schaft 2, 2' abstehenden Trennlappen 9 und 9' zwischen die Dichtungsmatte 5 und die Trägerplatte 6 und drücken diese etwas auseinander, so daß die Klemmwirkung zwischen den Vorsprüngen 7, 7' und den Spreizfingern 1, 1' noch etwas erhöht wird.

Der Clip läßt sich im Bedarfsfall ganz einfach lösen, indem zunächst die Vorsprünge 7, 7' zusammengedrückt und durch das Loch 11 geschoben werden. Sodann müssen die Rasthaken 8, 8' außer Eingriff gebracht und die Schafthälften 2, 2' nach außen gebogen werden. Dabei schwenken die Spreizfinger 1, 1' wieder zusammen und der Clip läßt sich problemlos aus dem Befestigungsloch 10 herausziehen.

## Patentansprüche

1. Plastik-Clip zur Blindbefestigung von weichelastischen Flachkörpern, insbesondere von Dichtungsmatten (5) auf Trägerplatten (6), bestehend aus zwei durch ein Befestigungsloch im Flachkörper hindurchsteckbaren, auf dessen Rückseite auseinanderdrückbaren Spreizfingern (1, 1') und sich auf der Vorderseite der Trägerplatte am Rand des Befestigungsloches abstützenden Vorsprüngen (7, 7'), welche mit den Spreizfingern über einen in das Befestigungsloch eintauchenden, geteilten Schaft (2, 2') einstückig verbunden sind, wobei die Hälften des geteilten Schafts an den sich gegenüberliegenden Knickkanten (3, 3') über einen flexiblen Steg (4) schwenkbar miteinander verbunden sind,
**dadurch gekennzeichnet**, daß die Schafthälften (2, 2') etwa rechtwinklig mit den Spreizfingern (1, 1') verbunden sind und von diesen im Anlieferungszustand nach außen abstehen.

2. Plastik-Clip nach Anspruch 1, dadurch gekennzeichnet, daß an den freien Enden der Schafthälften (2, 2') gegeneinandergerichtete, ineinandersteckbare Rasthaken (8, 8') vorgesehen sind.

3. Plastik-Clip nach Anspruch 1 oder 2, dadurch gekennzeichnet, daß zwischen den Knickkanten (3, 3') und den Vorsprüngen (7, 7') etwa rechtwinklig zu den Schafthälften (2, 2') dünne Trennlappen (9, 9') abstehen.

## Claims

1. A plastics clip for the blind fixing of soft-elastic flat bodies, in particular sealing mats (5) on carrier plates (6), comprising two spreading fingers (1, 1') which can be passed through a fixing hole in the flat body and which can be pressed apart on the rear side thereof, and projections (7, 7') which bear against the edge of the fixing hole on the front side of the carrier plate and which are integrally connected to the spreading fingers by way of a divided shank (2, 2') which extends into the fixing hole, wherein the halves of the divided shank are pivotably connected together by way of a flexible limb (4) at the mutually oppositely disposed bend edges (3, 3'), characterised in that the shank halves (2, 2') are connected approximately at a right angle to the spreading fingers (1, 1') and project outwardly therefrom in the condition as delivered.

2. A plastics clip according to claim 1 characterised in that disposed at the free ends of the shank halves (2, 2') are retaining hooks (8, 8') which are directed in opposite relationship and which can be fitted one into the other.

3. A plastics clip according to claim 1 or claim 2 characterised in that thin separating flaps (9, 9') project approximately at a right angle relative to the shank halves (2, 2') between the bend edges (3, 3') and the projections (7, 7').

## Revendications

1. Agrafe en matière plastique pour la fixation en aveugle d'éléments plats en matière plastique à cédage élastique souple, notamment de garnissages d'étanchéité (5) sur des plaques support (6), se composant de deux pattes expansibles (1) et (1') destinées à être emmanchées dans un trou de fixation prévu à cet effet dans l'élément plat et pouvant être écartées par pression contre sa face arrière, et de deux parties en saillie (7) et (7') prenant appui sur la face avant de la plaque support contre le bord du trou de fixation, qui sont réalisées solidaires des pattes expansibles par une tige en deux parties (2) (2') s'emmanchant dans le trou de fixation, les deux parties de cette tige étant en l'occurrence reliées l'une à l'autre, au niveau de leur arête repliée (3) (3') par une barrette entretoise souple (4), dans des conditions leur permettant de prendre une position oblique, **se caractérisant par le fait** que les deux moitiés de la tige (2) et (2') sont reliées avec les pattes expansibles (1) et (1') suivant une disposition sensiblement à angle droit et à l'état de livraison font saillie vers l'extérieur.

2. Agrafe en matière plastique suivant la revendication 1, se caractérisant par le fait que les deux moitiés de la tige (2) et (2') comportent, au niveau de leurs extrémités libres, des ergots d'encliquetage à disposition opposée l'un par rapport à l'autre (8) et (8') qui viennent s'accrocher l'un dans l'autre.

3. Agrafe en matière plastique suivant la revendication 1 ou 2, se caractérisant par le fait qu'elle comporte, entre les arêtes repliées (3) et (3') et les parties en saillie (7) et (7'), des languettes de séparation de faible épaisseur (9) et (9') qui sont disposées sensiblement à angle droit par rapport aux deux moitiés de la tige (2) et (2').
